(19) Europäisches Patentamt
European Patent Office
Office européen des brevets

(11) **EP 2 040 954 B1**

(12) **EUROPÄISCHE PATENTSCHRIFT**

(45) Veröffentlichungstag und Bekanntmachung des Hinweises auf die Patenterteilung:
**21.10.2015 Patentblatt 2015/43**

(21) Anmeldenummer: **07765030.7**

(22) Anmeldetag: **22.06.2007**

(51) Int Cl.:
**B60L 11/08** *(2006.01)* **H02P 9/14** *(2006.01)*
**H02M 7/5387** *(2007.01)*

(86) Internationale Anmeldenummer:
**PCT/EP2007/005889**

(87) Internationale Veröffentlichungsnummer:
**WO 2008/006490 (17.01.2008 Gazette 2008/03)**

(54) **ANORDNUNG UND VERFAHREN ZUM VERSORGEN VON VERBRAUCHERN IN EINEM SCHIENENFAHRZEUG**

SYSTEM AND METHOD FOR SUPPLYING CUSTOMERS IN A RAILCAR

DISPOSITIF ET PROCÉDÉ D'ALIMENTATION DE CONSOMMATEURS DANS UN VÉHICULE SUR RAILS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.07.2006 DE 102006033046**

(43) Veröffentlichungstag der Anmeldung:
**01.04.2009 Patentblatt 2009/14**

(73) Patentinhaber: **Bombardier Transportation GmbH 10785 Berlin (DE)**

(72) Erfinder: **STILL, Ludwig 64683 Einhausen (DE)**

(74) Vertreter: **Patentanwälte Bressel und Partner mbB Potsdamer Platz 10 10785 Berlin (DE)**

(56) Entgegenhaltungen:
**US-A1- 2006 022 647**

- **GENSLER C: "ANTRIEBSSTEUERUNG UND -REGELUNG IM DIESELELEKTRISCHEN TRIEBZUG BAUREIHE 605 DRIVE CONTROL OF D. M. U. CLASS 605 COMMANDE DE TRACTION DE L'AUTOMOTRICE DIESEL'ELECTRIQUE SERIE 605" ELEKTRISCHE BAHNEN, OLDENBOURG INDUSTRIEVERLAG, MUNCHEN, DE, Bd. 99, Nr. 10, Oktober 2001 (2001-10), Seiten 422-429, XP001102839 ISSN: 0013-5437**
- **HOULDSWORTH JOHN A ET AL: "The Use of Harmonic Distorsion to Increase the output voltage of a three-phase PWM inverter" IEEE TRANSACTIONS ON INDUSTRY APPLICATIONS, IEEE SERVICE CENTER, PISCATAWAY, NJ, US, Bd. IA-20, Nr. 5, September 1984 (1984-09), Seiten 1224-1228, XP002113435 ISSN: 0093-9994**
- **CHOLLET M ET AL: "DIESELELEKTRISCHE GUTERZUGLOKOMOTIVE EURORUNNER. ER20 CF FUER DIE LITAUISCHE STAATSBAHN-DIE SECHSACHSIGE DIESELELEKTRISCHE LOKOMOTIVFAMILIE EURORUNNER DIESEL-ELECTRIC FREIGHT LOCOMOTIVE EURORUNNER ER20 CF FOR THE LITUANIAN RAILWAYS-THE SIX-AXLE DIESEL" Juni 2007 (2007-06), ZEVRAIL - GLASERS ANNALEN, GEORG SIEMENS VERLAG, BERLIN, DE, PAGE(S) 138-150 , XP001541450 ISSN: 1618-8330 Seite 143 - Seite 144; Abbildung 10**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anordnung und ein Verfahren zum Versorgen von Verbrauchern in einem Schienenfahrzeug mit elektrischer Energie. Insbesondere kann es sich bei dem Schienenfahrzeug um ein von einem dieselelektrischen Antriebsaggregat angetriebenes Triebfahrzeug handeln oder um ein Schienenfahrzeug, das Teil eines Zugverbandes ist, der durch ein dieselelektrisches Antriebsaggregat angetrieben wird.

Bei dieselelektrischen Antriebsaggregaten ist es üblich, die Verbraucher in dem Schienenfahrzeug oder Zugverband dadurch mit elektrischer Energie zu versorgen, dass ein Generator, der von dem Dieselmotor angetrieben wird, die elektrische Energie erzeugt, der Generator an einen Gleichspannungs-Zwischenkreis angeschlossen ist und ein Verbraucher-Wechselrichter vorgesehen ist, der aus der Gleichspannung des Zwischenkreises Wechselspannung erzeugt. Mit dem Verbraucher-Wechselrichter ist eine Wechselspannungs-Verbraucherverbindung verbunden, die die elektrische Energie von dem Verbraucher-Wechselrichter zu dem Verbraucher oder zu den Verbrauchern überträgt. Bei der Wechselspannungs-Verbraucherverbindung kann es sich insbesondere um eine Verbindung handeln, die eine so genannte Zugstrom-Sammelschiene aufweist. Daher handelt es sich bei den Verbrauchern insbesondere um solche, die nicht dem Antrieb des Schienenfahrzeugs oder des Zugverbandes dienen, sondern Funktionen wie Heizung, Licht und/oder Klimaanlage dienen.

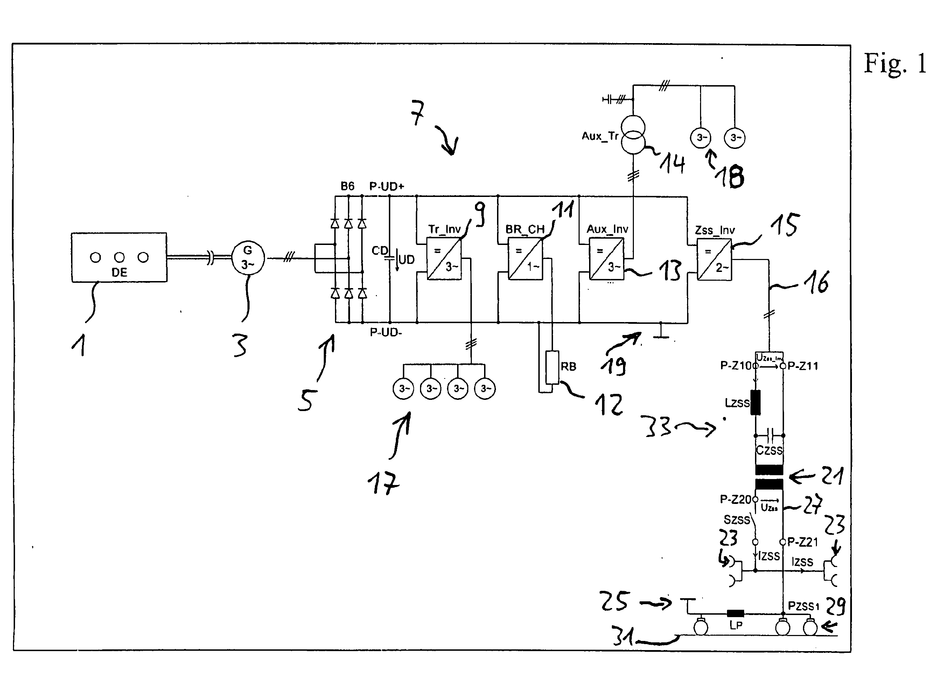

Eine derartige Anordnung ist in der beigefügten Fig. 1 schematisch dargestellt. Ein Dieselmotor 1 treibt einen Generator 3 an, der einen Dreiphasen-Wechselstrom erzeugt, welcher über einen Gleichrichter 5 gleichgerichtet wird. Der Gleichrichter 5 ist an einen Gleichspannungs-Zwischenkreis 7 angeschlossen. Die Potentiale des Gleichspannungs-Zwischenkreises 7 sind mit P-UD+ (obere in Fig. 1 dargestellte Seite des Zwischenkreises 7) und mit P-UD- (untere in Fig. 1 dargestellte Seite des Zwischenkreises 7) bezeichnet. Das Potential P-UD- ist an der mit den Bezugszeichen 19 bezeichneten Stelle mit Fahrzeugmasse, insbesondere metallischen Teilen des Fahrzeugkörpers, verbunden. Auf diese Weise ist ein Bezugspotential (hier: Massepotenzial) für den Zwischenkreis 7 definiert.

An den Zwischenkreis 7 sind ein Traktionswechselrichter 9, der vier Antriebsmotoren 17 des Schienenfahrzeugs über eine dreiphasige Verbindung versorgt, ein Brems-Chopper 11, an den ein Bremswiderstand 12 angeschlossen ist, ein Hilfsbetriebe-Wechselrichter 13, der Hilfsbetriebe 18 über eine Dreiphasen-Wechselstromleitung versorgt, und ein Verbraucher-Wechselrichter 15 angeschlossen, der die genannten Verbraucher über eine einphasige Verbraucherverbindung mit elektrischer Energie versorgt.

Ferner sind wie üblich Kapazitäten CD zwischen die Potentiale des Zwischenkreises 7 geschaltet. Bei einer anderen Ausgestaltung kann der Verbraucher-Wechselrichter die Verbraucher über eine dreiphasige Wechselspannungs-Verbraucherverbindung mit elektrischer Energie versorgen.

Der in Fig. 1 dargestellte Hilfsbetriebe-Wechselrichter 13 ist über einen Trenntransformator 14, der eine galvanische Trennung bewirkt, mit den Hilfsbetrieben 18 verbunden. Außerdem ist auch in der Wechselspannungs-Verbraucherverbindung 16 ein Trenntransformator 21 vorgesehen, so dass eine galvanische Trennung zwischen dem Verbraucher-Wechselrichter 15 und den Verbrauchern besteht.

In Fig. 1 sind die Verbraucher nicht dargestellt, sondern lediglich ein Teil einer Zugstrom-Sammelschiene IZSS und elektrische Anschlüsse 23 zum Anschließen der Verbraucher bzw. zum Anschließen weiterer Abschnitte der Zugstrom-Sammelschiene.

Aus Fig. 1 ist erkennbar, dass die Zugstrom-Sammelschiene IZSS lediglich eine Leitung umfasst. Die zweite Leitung, die zur Übertragung der Energie von dem Verbraucher-Wechselrichter zu den Verbrauchern benötigt wird, wird über Fahrzeugmasse/Fahrschiene hergestellt. Hierzu ist die Leitung 27 an der Ausgangsseite des Trenntransformators 21 (Sekundärseite) an der mit 25 gekennzeichneten Stelle über eine niederohmige Impedanz mit der Fahrzeugmasse verbunden. Außerdem ist diese Leitung 27 über die Raderdkontakte/Räder 29 des Schienenfahrzeugs mit der Fahrschiene 31 verbunden.

Zwischen dem Verbraucher-Wechselrichter und dem Trenntransformator 21 ist ein L-C-Glied mit einer Induktivität LZSS und mit einer Kapazität CZSS als Filter vorgesehen. Auf der Verbraucherseite des Trenntransformators 21 befindet sich ein Schalter SZSS, durch den die Zugstrom-Sammelschiene IZSS von dem Trenntransformator 21 getrennt werden kann, so dass die Stromversorgung der Verbraucher abgeschaltet werden kann.

Das Transformationsverhältnis des Trenntransformators 21 kann verändert werden, so dass das Verhältnis der Ausgangsspannung zu der Eingangsspannung des Trenntransformators 21 angepasst werden kann.

Zwar findet durch den Trenntransformator 21 eine galvanische Trennung statt. Da jedoch sowohl das niedrige Potential P-UD- des Zwischenkreises 7 direkt oder auch über eine Impedanz als auch eine Leitung auf der Verbraucherseite (Sekundärseite) des Trenntransformators 21 direkt mit Fahrzeugmasse/Fahrschiene verbunden sind, ist im Ergebnis keine vollständige galvanische Trennung zwischen dem Verbraucher-Wechselrichter 15 bzw. dem Zwischenkreis 7 einerseits und den Verbrauchern andererseits vorhanden. Die Stromrückführung von Verbraucher bei einphasiger Zugsammelschienenspeisung erfolgt über Raderdkontakte, Räder und die Fahrschiene. Die eigentlichen Vorteile der galvanischen Trennung werden durch diese Art der Stromrückführung zu Nichte gemacht.

Die Erfindung betrifft daher eine Anordnung und ein Verfahren der vorgenannten Art, die es ermöglichen, das Gewicht, das Volumen und die Kosten zu reduzieren.

Eines der Wechselspannungspotentiale eines über den Verbraucher-Wechselrichter versorgten Verbrauchers oder ein Potential eines Ausgangs des Verbraucher-Wechselrichters ist daher als ein gemeinsames Bezugspotential für den Verbraucher-Wechselrichter und den Verbraucher ausgestaltet. Daher wird in der Wechselspannungs-Verbraucherverbindung auf eine galvanische Trennung verzichtet. Da auch der Verbraucher-Wechselrichter keine galvanische Trennung zu dem Zwischenkreis bewirkt, liegt in der Regel (außer bei gesperrtem Wechselrichter) eines der beiden Potentiale des Zwischenkreises (direkt oder über eine Induktivität) auf dem gemeinsamen Bezugspotential. Daher ist bei taktendem Verbraucher-Wechselrichter auch der Generator über den Gleichrichter und den Zwischenkreis mit dem gemeinsamen Bezugspotential verbunden.

C. Gensler: "Antriebssteuerung und -regelung im dieselelektrischen Triebzug Baureihe 605 drive control of D.M.U. class 605 Commande de Traction de L'Automotrice Diesel Elektrique Serie 605" Elektrische Bahnen, Oldenbourg Industrieverlag, München, DE Bd. 99, Nr. 10, Oktober 2001 (2001-10), Seiten 422-429, XP0011 02839, ISSN: 0013-5437 beschreibt das Antriebskonzept der dieselelektrischen Neigetechnik-Triebzüge, Baureihe 605. Anhand von Bild 4 wird das Traktions- und Bordnetz beschrieben. Es sind Dieselmotoren erkennbar, die jeweils einen Stromgenerator antreiben, dessen dreiphasiger Wechselstrom gleichgerichtet wird und in einem Gleichspannungszwischenkreis eingespeist wird, an den ein so genannter EVB-Container angeschlossen ist. In Abschnitt 2.3 "Bordnetzversorgung", linke Spalte und mittlere Spalte auf Seite 424 wird der EVB (Energieversorgungsblock) näher beschrieben. Der EVB liefert die verschiedenen Betriebsspannungen für die einzelnen Verbraucher einer Traktionseinheit, z.B. Luftpresser und Kühlanlage, Klimakompressoren, Steckdosen im Fahrgastraum, Ladegerät der Bordnetzbatterie und Magnetschienenbremsen. Bei abgestelltem Zug wird über einen externen Anschluss mit Wechselstrom versorgt. Je nach Betriebszustand und Art der Einspeisung kann ein EVB über Koppelschütze auch an den Zwischenkreis der anderen Traktionseinheit angeschaltet werden. Somit kann beim Betrieb nur eines der vier Dieselmotoren nicht nur eine der Traktionsanlagen, sondern auch das gesamte Bordnetz versorgt werden. Der EVB betreibt verschiedene IGBT-Drehrichter und DC-Steller für verschiedene Spannungen.

M. Chollet et al.: "Dieselelektrische Güterzuglokomotive Eurorunner. ER20 CH für die Litauische Staatsbahn - die sechsachsige dieselelektrische Lokomotivfamilie Eurorunner Diesel-Electric Freight Locomotive Eurorunner ER20 CF for the Lituanlan Railways - The Six-Axle Diesel", Juni 2007 (2007-06), Zevrail - Glasers Annalen, Georg Siemens Verlag, Berlin, DE, Page(s) 138-150, XP001541450, ISSN: 1618-8330 beschreibt anhand von Bild 10 den Hauptstromkreis der Güterzuglokomotive.

Im Maschinenraum der Lokomotive befindet sich ein E-Block, in den u.a. folgende Komponenten und Funktionseinheiten integriert sind: eine ungesteuerte Gleichrichterbrücke, ein Gleichspannungszwischenkreis, zwei Traktionspulswechselrichter und ein Wechselrichter in wassergekühlter IGBT-Technik zur Speisung der Hilfsbetriebe sowie die Hilfsbetriebe- und Batterieverteilung.

Nun stellt sich aber das Problem, dass die effektive Spannung der Wechselspannungs-Verbraucherverbindung jederzeit während des Betriebes auf einem Mindestwert gehalten werden muss, der lediglich innerhalb bestimmter Toleranzen zeitweise unterschritten werden darf. Bei Stillstand des Schienenfahrzeugs, oder wenn die Traktion des Schienenfahrzeugs aus anderen Gründen null ist, wird der Generator aber in der Regel bei (im Vergleich zu dem sonstigen Betrieb) niedriger Drehzahl betrieben. Um eine höhere Drehzahl des Generators zu erreichen müsste die Antriebsmaschine ebenfalls bei höherer Drehzahl betrieben werden, was aber mit erhöhtem Primärenergieverbrauch und (insbesondere in Bahnhöfen) unerwünschter Geräuschbelästigung verbunden ist.

Eine mögliche Lösung wäre es daher, elektronische Ventile das Verbraucher-Wechselrichters so anzusteuern, dass die Polarität der Zugsammelschiene entsprechend einer Rechtecktaktung wechselt. Dabei wird die Breite der positiven und negativen Spannungsblöcke geregelt, d. h. veränderliche, für die positive wie für die negative Halbwelle gleiche Lücken ohne Spannung gelassen. Der Artikel von Albrecht Graefen in ETR, Zeitschrift für die gesamte Eisenbahntechnik, 21. Jahrgang, Heft 10, Oktober 1972, Selten 363 bis 370, schlägt eine solche Lösung vor.

Ein solches Verfahren bewirkt jedoch störende, unzulässige Oberschwingungen, d.h. es werden Frequenzsignale mit unzulässig hohen Amplituden erzeugt. Solche Frequenzsignale stören insbesondere den Betrieb von anderen Stromrichtern, die an den Zwischenkreis angeschlossen sind.

Es ist eine Aufgabe der vorliegenden Erfindung, ein Verfahren und eine Anordnung der zuvor genannten Art anzugeben, die es bei niedriger Drehzahl des Generators und/oder wenn die Traktion des Schienenfahrzeugs null ist, eine hohe effektiver Spannung der Wechselspannungs-Verbraucherverbindung zu gewährleisten, wobei jedoch die Erzeugung von Frequenzsignalen durch den Betrieb des Verbraucher-Wechselrichters reduziert oder vermieden werden soll.

Um die Effektivspannung der Wechselspannungs-Verbraucherverbindung auch bei Stillstand des Schienenfahrzeugs ausreichend hoch zu halten, werden zwei alternative Maßnahmen vorgeschlagen, die optional auch miteinander kombiniert werden können:

I. Der Generator wird bei niedriger Drehzahl, während das Schienenfahrzeug keine Antriebskraft benötigt, übererregt betrieben.

II. Ventile des Verbraucher-Wechselrichters werden so angesteuert werden, dass der Effektivwert der Spannung der Wechselspannungs-Verbraucherverbindung über der Spannung des Gleichspannungs-Zwischenkreises liegt.

Auf die Details beider Maßnahmen wird noch näher eingegangen. In beiden Fällen können störende Frequenzsignale (Oberschwingungen) aufgrund des Betriebes des Verbraucher-Wechselrichters ganz oder teilweise vermieden werden. Bei der Übererregung des Generators ist dies sofort ersichtlich. Bei dem speziellen Verfahren zur Steuerung des Verbraucher-Wechselrichters wird auf die Details der Maßnahmen noch eingegangen.

Um eine höhere Ausgangsspannung an dem Verbraucher-Wechselrichter zu erzielen, kann der Generator, der vorzugsweise eine Synchronmaschine ist, bei niedriger Drehzahl übererregt betrieben werden. Dies ist insbesondere dann der Fall, wenn der Dieselmotor, der den Generator antreibt, mit niedriger Drehzahl läuft, weil das Schienenfahrzeug keine Antriebskraft benötigt. Der Betrieb des Generators bei Über-Erregung erleichtert es, vorgeschriebene Versorgungsspannungsbereiche der Verbraucher einzuhalten.

Alternativ oder zusätzlich kann die im Folgenden beschriebene Verfahrensweise angewendet werden, wobei die Anordnung vorzugsweise entsprechende Einrichtungen aufweist.

Die Ventile des Verbraucher-Wechselrichters können zumindest zeitweise so angesteuert werden, dass der resultierende Effektivwert der Spannung der Wechselspannungs-Verbraucherverbindung über dem Effektivwert einer Sinusgrundschwingungsspannung liegt, die aus der Spannung des Gleichspannungs-Zwischenkreises erzeugt wird. Dabei werden die Ventile durch Pulsweitenmodulationssignale angesteuert und werden die Zeitpunkte der Flanken der Pulsweitenmodulationssignale durch eine Steuer-Sollspannung und eine Vergleichsspannung gesteuert, wobei die Zeitpunkte der Flanken durch Schnittpunkte der Steuer-Sollspannung und der Vergleichsspannung bestimmt werden. Die Steuer-Sollspannung wird so gewählt, dass sich ein Maximum an Effektivspannung ergibt und definierte Taktfrequenzen beibehalten werden. Zu diesem Zweck werden die Ventile im Bereich des Spannungsmaximums kurzzeitig umgeschaltet werden.

Unter dem kurzzeitigen Umschalten wird verstanden, dass die Ventile kurzzeitig in den jeweils anderen Schaltzustand gebracht werden und wieder zurück in den Schaltzustand gebracht werden, mit dem der Maximalwert des Spannungsbetrages (annähernd) beibehalten wird. Das kurzzeitige Umschalten der Ventile hat den Vorteil, dass die Taktfrequenz der Pulsweitenmodulationssignale beibehalten werden kann und daher definierte niederfrequente harmonische Spannungssignale vermieden werden können.

Insbesondere kann die Steuer-Sollspannung so gewählt werden, dass einer Sinus-Grundschwingung eine Schwingung mit der Frequenz der dritten harmonischen Schwingung der Grundschwingung überlagert ist, die das kurzzeitige Umschalten bewirkt.

Vorzugsweise werden die Ventile nur dann kurzzeitig während der Zeitspannen, in denen der Betrag der Spannung der Wechselspannungs-Verbraucherverbindung seinen Maximalwert annehmen soll, umgeschaltet, wenn gemäß einem vordefinierten Kriterium Bedarf hierfür besteht. Dies ist insbesondere dann der Fall, wenn die Spannung des Gleichspannungs-Zwischenkreis niedrig ist und angeschlossene Wechselrichter zur Versorgung von Antriebsmotoren des Schienenfahrzeugs oder des Zugverbandes mit elektrischer Energie gesperrt sind.

In allen anderen Fällen kann mit an sich aus dem Stand der Technik bekannten Verfahren versucht werden, den Effektivwert der Ausgangsspannung des Verbraucher-Wechselrichters zu erhöhen, wie es auch mit dem zuvor beschriebenen erfindungsgemäßen Verfahren der Fall ist.

Wenn zwei oder mehr autarke Verbraucher-Wechselrichter jeweils Verbraucher mit gleichem Bezugspotential über eine Wechselspannungs-Verbraucherverbindung mit elektrischer Energie versorgen, kann lediglich bei einem der Wechselspannungs-Verbraucherverbindungen auf die galvanische Trennung verzichtet werden. Grund hierfür ist das zyklische Schalten der Plus-Minus-Zwischenkreispotentiale an die Ausgänge der Verbraucher-Wechselrichter. Sind verschiedene Verbraucher-Wechselrichter eines Zwischenkreises an einer Ausgangsseite mit einem gemeinsamen Potential verbunden, so ergeben sich beim Schalten Zwischenkreiskurzschlüsse. Entsprechendes gilt auch für 3-phasige Verbraucher-Wechselrichter bei denen eine elektrische Leitung, die den Wechselrichter ohne galvanische Trennung mit Anschlusspunkten für die Verbraucher verbindet, z. B. Teil einer Zugstrom-Sammelschiene ist.

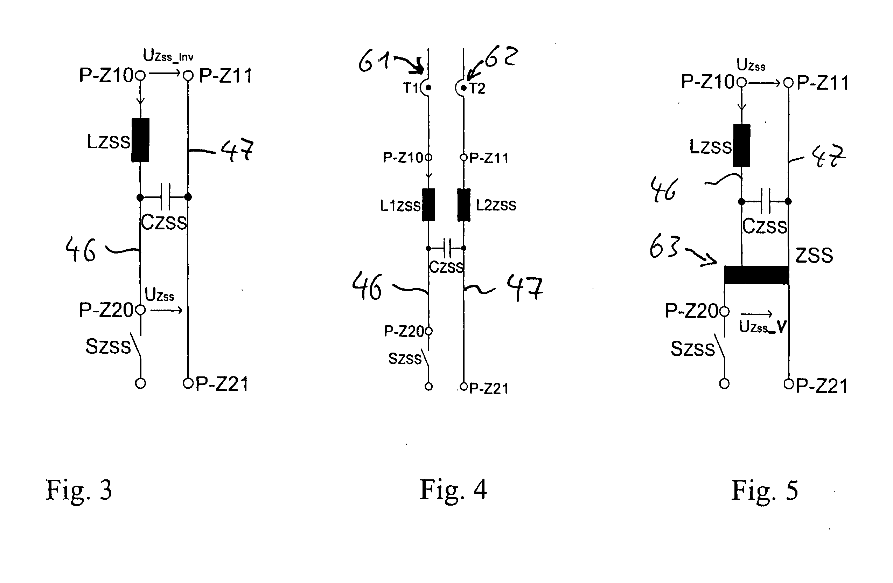

Als gemeinsames Bezugspotential kann insbesondere auch das Schienenpotential des Fahrzeugs betrachtet werden, da in der Wechselspannungs-Verbraucher-verbindung lediglich vernachlässigbar kleine Widerstände und/oder Impedanzen zwischen Schienenpotenzial und Verbraucher-Wechselrichter angeordnet sind. Insbesondere kann zur Übertragung der Energie von dem Verbraucher-Wechselrichter zu dem oder den Verbrauchern eine zweite elektrische Leitung der Wechselspannungs-Verbraucherverbindung den Verbraucher-Wechselrichter ohne galvanische Trennung direkt oder über niederohmige Impedanzen (L2ZSS, Fig. 4) mit einem Massepotenzial (insbesondere dem Schienenpotential) des Fahrzeugs verbinden. Daher kann die Fahrschiene als eine Leitung der Wechselspannungs-Verbraucherverbindung genutzt werden. Wie auch bei Lösungen, die aus dem Stand der Technik bekannt sind, kann die Wechselspannungs-Verbraucherverbindung z.B. eine einphasige Verbindung oder eine dreiphasige Verbindung sein. Aus der Tatsache, dass die zweite Leitung keine galvanische Trennung enthält, folgt die Möglichkeit, auch einen beliebigen anderen Punkt in der Leitung als Bezugspunkt für das Referenzpotenzial zu definieren.

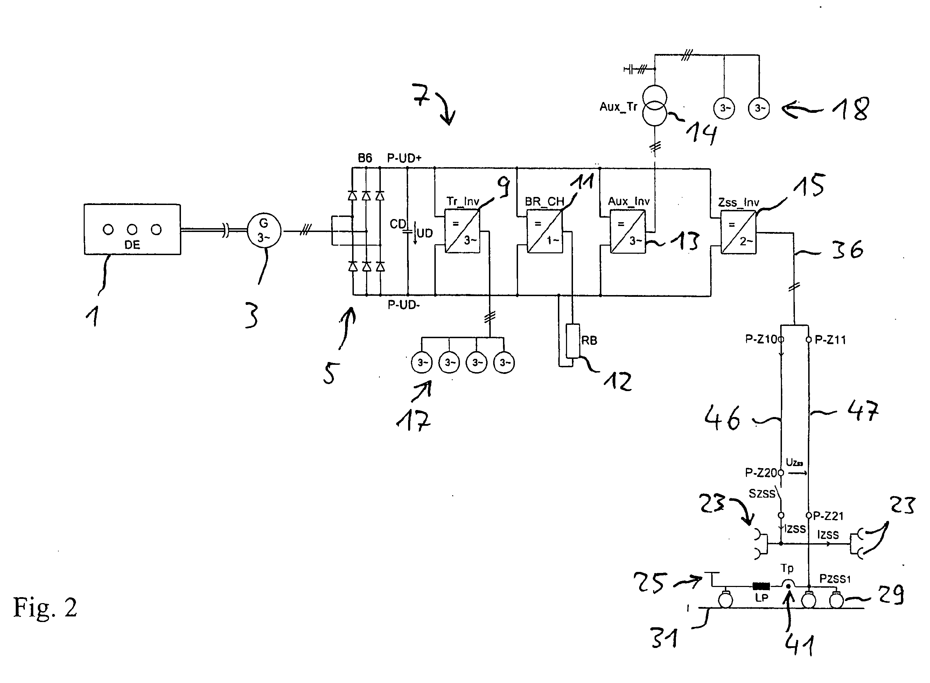

Wie in dem Beispiel gemäß Fig. 1 und 2 gezeigt, werden bei Schienenfahrzeugen üblicherweise die Fahrzeugerdung und die eigentliche Rückführung von Strömen der Fahrschiene ins Fahrzeug über getrennte Räder / Raderdkontakte geführt. Die direkte Masseanbindung des Fahrzeuges (Punkt 25) erfolgt hierbei über das linke Rad und die Rückführung der eigentlichen Verbraucherströme über Fahrschiene und die beiden rechten Räder/Raderdkontakte zum Punkt PZSS1 der Wechselspannungs-Verbraucherverbindung.

Bevorzugt wird der Fahrzeugmassepunkt 25 aus Redundanzgründen über eine niederohmige Impedanz wie z. B eine stromsättigbare Induktivität LP (Fig. 2) oder alternativ hierzu über einen niederohmigen Schutzwiderstand von ca. 0,05 bis 0,2 Ohm mit dem Anschlusspunkt PZSS1 verbunden.

Der Punkt PZSS1 ist ein zentraler Anschlusspunkt für eine Rückführung des Stroms von den Verbrauchern zu dem Verbraucher-Wechselrichter. "Rückführung" ist im Zusammenhang mit "Hinführung" über eine andere Leitung (hier die Zugstromsammelschiene) zu verstehen, wobei es sich bei den Strömen um Wechselströme handelt. Der Anschlusspunkt liegt in der hier beschriebenen Ausgestaltung im Triebfahrzeug und ist elektrisch mit Rädern des Triebfahrzeugs verbunden ist. Z. B. ist er dadurch definiert, dass er die Verzweigung zu der Masseanbindung (Punkt 25) bildet und/oder den Kontakt zu einem der Räder bildet. In jedem Fall liegt der Anschlusspunkt PZSS1 an einer Stelle, die bei konventionellen Lösungen galvanisch von der Ausgangsseite (Wechselspannungsseite) des Verbraucher-Wechselrichters getrennt ist.

Das Potenzial an dem Punkt PZSS1 kann als Bezugspotenzial definiert werden.

Um undefinierte Rückströme über Wagenmasse zu erfassen, ist bei einer bevorzugten Ausgestaltung in der Verbindung zwischen Fahrzeugmassepotential (Punkt 25) und Anschlusspunkt der Rückstromführung PZSS1 ein Stromsensor Tp geschaltet, der den Strom durch die Verbindung erfasst und bei Überschreitung Schutzmassnahmen auslöst.

Parallel zu der Drosselspule oder zu dem Schutzwiderstand kann vorteilhaft ein Kondensator geschaltet sein (insbesondere mit einer Kapazität im Bereich von 1 - 20 µF). Hierdurch können durch kapazitive Kopplung verschiedener Stromkreise bewirkte Ströme außerhalb des Fahrzeugs reduziert oder vermieden werden.

Die Spannung in der Wechselspannungs-Verbraucherverbindung kann durch einen Transformator ohne galvanische Trennung (Spartransformator) transformiert werden. In dieser Verbraucherverbindung kann daher ein Spartransformator angeordnet sein, so dass eine Einstellung des Verhältnisses der Versorgungsspannung der Verbraucher zu der Ausgangsspannung des Verbrauch-Wechselrichters möglich ist. Ein Spartransformator mit einem Übersetzungsverhältnis nahe bei 1 (insbesondere im Bereich von 0,5 bis 1,5) kann jedoch wesentlich leichter, mit geringerem Bauvolumen und zu geringeren Kosten realisiert werden als ein Trenntransformator.

Gemäß Anspruch 1 weist die Wechselspannungs-Verbraucherverbindung und/oder eine elektrische Verbindung zwischen dem Verbraucher-Anschlusspunkt und dem Verbraucher ein Tiefpassfilter auf, welches durch eine Induktivität und eine Kapazität realisiert werden kann. Die Kapazität ist zwischen eine erste und eine zweite Leitung der Verbindung zwischen dem Verbraucher-Wechselrichter und dem Anschlusspunkt bzw. dem Verbraucher geschaltet.

Gemäß dieser in Anspruch 1 definierten Lösung ist die Induktivität aus schutztechnischen Gründen auf die verschiedenen Verbindungsleitungen der Wechselspannungs-Verbraucherverbindung aufgeteilt. Die Aufteilung der Induktivität kann zweckmäßig sein, um Stromanstiege, die bei Masseschluss eines der Betriebsmittel innerhalb der Gesamtschaltung verursachten werden, zu begrenzen und dadurch die Schutzreaktionen der Halbleiterschalter zu ermöglichen bzw. zu erleichtern.

Bei einer Wechselspannungs-Verbraucherverbindung, die eine einphasige Wechselstrom-Verbindung mit zwei Leitungen aufweist, sind vorzugsweise Stromsensoren vorgesehen, die ausgestaltet sind, die Ströme durch die beiden Leitungen und/oder die Summe der Ströme zu messen. Außerdem ist in diesem Fall eine Strom-Auswertungseinrichtung vorgesehen, die ausgestaltet ist, die gemessenen Ströme auf definierte Maximalwerte und/oder betragsmäßig miteinander zu vergleichen und bei einer vordefinierten Überschreitung bzw. bei einem vordefinierten Unterschied der beiden Ströme ein Signal auszugeben bzw. die Summe auszuwerten und bei Erreichen oder Überschreiten eines vordefinierten Wertes der Summe ein Signal auszugeben. Bei Empfang des Signals kann der Verbraucher-Wechselrichter gesperrt, oder alternativ oder zusätzlich ein oder mehrere andere Halbleiterschalter, der oder die am gleichen Zwischenkreis arbeiten, ausgeschaltet werden. Auf diese Weise können ein Masseschluss oder Erdschluss innerhalb der Gesamtschaltung detektiert werden und durch entsprechende Schutzreaktionen Folgeschäden verhindert werden.

Entsprechende Maßnahmen, die einen Stromsensor in allen drei Leitungen oder auch eine Summenstrommessung beinhalten, können auch ergriffen werden, wenn der Verbraucher-Wechselrichter und die Wechselspannungs-Verbraucherverbindung dreiphasig sind.

Obwohl die Potentiale des Gleichspannungs-Zwischenkreises nicht direkt, sondern lediglich über den Verbraucher-Wechselrichter mit dem Bezugspotential verbunden sind und damit bei bestimmten Ausgestaltungen auch mit Fahrzeugmasse, können eines oder beide Potentiale des Zwischenkreises über einen Widerstand oder über Widerstände direkt mit dem Massepotential verbunden sein, wobei jedoch der Widerstand bzw. Gesamtwiderstand hochohmig ist und z.B. im Bereich von 5 bis 100 kOhm liegt. Die hochohmige Verbindung sorgt bei gesperrtem Verbraucher-Wechselrichter für eine definierte Potentialanbindung, die es gestattet, durch Messung des Zwischenkreispotentials gegen Masse Erdschlüsse innerhalb der Schaltung selektiv zu detektieren.

Außerdem gehört zum Umfang der Erfindung ein Verfahren zum Versorgen von Verbrauchern in einem Schienenfahrzeug mit elektrischer Energie. Grundgedanke des Verfahrens ist es, die elektrische Energie von dem Verbraucher-Wechselrichter ohne galvanische Trennung (in einer elektrischen Leitung der Wechselspannungs-Verbraucherverbindung) zu dem oder den Verbrauchern zu übertragen.

Bezüglich Ausgestaltungen und Varianten des Verfahrens wird auf die Beschreibung der Anordnung verwiesen.

Ausführungsbeispiele der Erfindung werden nun unter Bezugnahme auf die beigefügte Zeichnung beschrieben. Die einzelnen Figuren der Zeichnung zeigen:

Fig. 1      eine Anordnung zum Versorgen von Verbrauchern in einem Schienenfahrzeug mit elektrischer Energie und galvanischer Trennung zwischen dem Verbraucher-Wechselrichter und den Verbrauchern,

Fig. 2      eine Anordnung zum Versorgen von Verbrauchern in einem Schienenfahrzeug mit elektrischer Energie, wobei zwischen dem Verbraucher-Wechselrichter und Verbraucher-Anschlusspunkten keine galvanische Trennung vorgesehen ist,

Fig. 3      einen Teil der Wechselspannungs-Verbraucherverbindung mit einem L-C-Tiefpassfilter,

Fig. 4      einen Teil der Wechselspannungs-Verbraucherleitung mit einem L-C-Tiefpassfilter, wobei die Induktivitäten des Tiefpassfilters auf die beiden Leitungen der Verbindung aufgeteilt sind und wobei die beiden Leitungen jeweils durch einen Stromsensor überwacht werden,

Fig. 5      einen Teil einer Wechselspannungs-Verbraucherverbindung mit einem Spartransformator und einem L-C-Tiefpassfilter,

Fig. 6      eine Ausgestaltung eines Verbraucher-Wechselrichters für eine zweiphasige Verbraucherleitung,

Fig. 7      zeitliche Verläufe von Steuerspannungen zur Steuerung des Verbraucher-Wechselrichters und Pulsweitenmodulationssignale, mit denen die Ventile des Wechselrichters gesteuert werden,

Fig. 8      eine Darstellung wie in Fig. 7, wobei jedoch eine der Steuerspannungen verändert ist,

Fig. 9      eine Darstellung wie in Fig. 7 und Fig. 8, wobei eine der Steuerspannungen aus einer Sinus-Grundschwingung und einer überlagerten Schwingung mit der dritten harmonischen Schwingung der Grundschwingung zusammengesetzt ist, und

Fig. 10     ein typischer zeitlicher Verlauf der Spannung zwischen dem einen Potential des Zwischenkreises und Massepotential.

Die Darstellung in Fig. 2 entspricht der bereits erläuterten Darstellung in Fig. 1 mit wenigen Unterschieden. Im Folgenden soll lediglich auf die Unterschiede eingegangen werden. Keines der beiden Potentiale P-UD+, P-UD- des Zwischenkreises 7 liegt direkt auf Massepotential des Fahrzeuges. Zwar ist der Hilfsbetriebe-Wechselrichter 13 gegenüber der Anordnung gemäß Fig. 1 unverändert über den Trenntransformator 14 mit den Hilfsbetrieben 18 verbunden. Jedoch entfällt in der Anordnung gemäß Fig. 2 der Trenntransformator 21 in der Wechselspannungs-Verbraucherleitung, die hier mit Bezugzeichen 36 bezeichnet ist.

Die über die Wechselspannungs-Verbraucherverbindung 36 versorgten Verbraucher dienen insbesondere Funktionen, die in anderen Fahrzeugen (Wagen) eines Zugverbandes ausgeführt werden, der von dem Schienen-Triebfahrzeug bewegt wird. Das Schienen-Triebfahrzeug ist insbesondere eine dieselelektrisch angetriebene Lokomotive. Sämtliche der in Fig. 2 dargestellten Teile der Anordnung können in dem Schienentriebfahrzeug angeordnet sein. Über die Anschlusspunkte 23 kann die Zugstrom-Sammelschiene IZSS mit den anderen Fahrzeugen/ Wagen des Zugverbandes elektrisch verbunden sein.

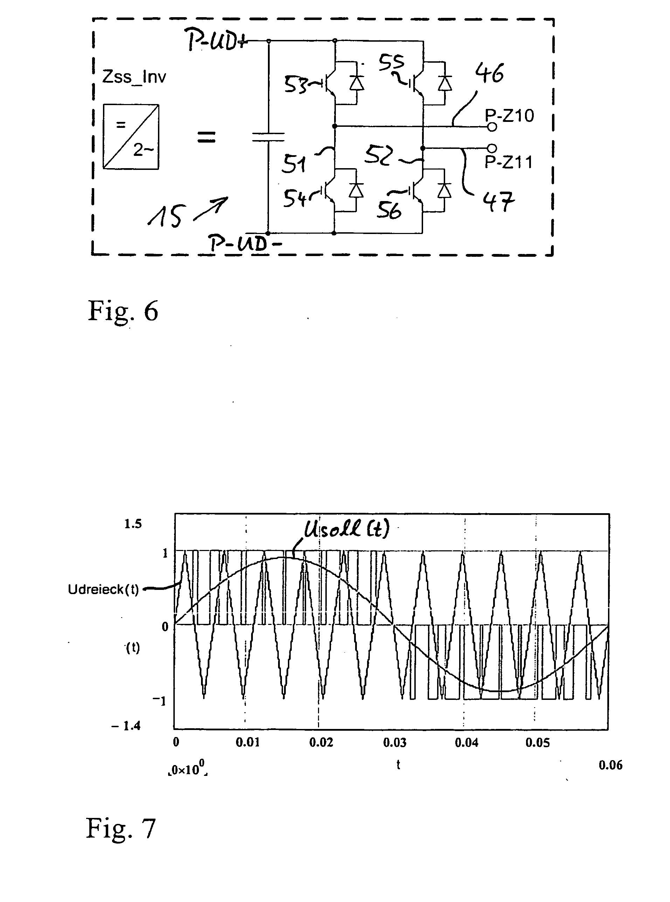

Die Wechselspannungs-Verbraucherverbindung weist zwei Leitungen 46, 47 auf. Die Leitung 46 ist über den Schalter (insbesondere ein Schütz) SZSS mit der Zugstrom-Sammelschiene IZSS verbunden. Die andere Leitung 47 ist über den Verbindungspunkt PZSS1 (siehe Fig. 2), über Raderdkontakte und Räder mit der Fahrschiene verbunden und über eine Drosselspule LP oder einen niederohmigen Widerstand an dem mit Bezugzeichen 25 gekennzeichneten Punkt mit Fahrzeugmasse verbunden. Oberhalb der in Fig. 2 mit den Bezugzeichen P-Z10, P-Z11 markierten Stellen der Leitungen 46, 47 ist die Verbraucherverbindung 36 vereinfacht lediglich durch einen Strich dargestellt. Die Leitungen 46, 47 sind jedoch durchgehend unmittelbar mit dem jeweiligen Zweig 51, 52 (siehe Fig. 6) des Wechselrichters 15 verbunden, wobei die Zweige jeweils eine Serienschaltung aus zwei Ventilen 53, 54 bzw. 55, 56 aufweisen und wobei den Ventilen jeweils eine Freilaufdiode antiparallel geschaltet ist. Die in Fig. 6 dargestellten Punkte P-Z10, P-Z11 sind gleich den in Fig. 2 (und in Fig. 3 bis Fig. 5) so bezeichneten Punkten, wobei die Figuren 3 bis 5 verschiedene Ausgestaltungsvarianten von der Anordnung in Fig. 2 zeigen. Zwischen diesen Punkten liegt in der Verbraucherverbindung 36, d.h. zwischen den Leitungen 46, 47, die Ausgangsspannung UZSS des Wechselrichters 15 an.

Ein weiterer Unterschied zwischen Fig. 2 und Fig. 1 besteht darin, dass in Reihe zu der Drosselspule LP ein Stromsensor 41 geschaltet ist, mit dem der über Fahrzeugmasse und die Impedanz LP zum gemeinsamen Verbindungspunkt PZSS1 fließende Strom gemessen werden kann. Der Stromsensor 41 ermöglicht es, Rückströme zu messen, die nicht über die für die Rückstromführung vorgesehenen Räder zur Leitung 47 fließen zu detektieren und bei Überschreitung definierter Höchstwerte Schutzreaktionen wie das Sperren des Verbraucher-Wechselrichters zu bewirken.

Wie Fig. 3 zeigt, kann in die Leitung 46 eine Filter-Induktivität LZSS geschaltet sein und kann zwischen die Leitungen 46, 47 eine Filter-Kapazität CZSS geschaltet sein, zum Zweck der Glättung der Ausgangsspannung UZSS. Im Übrigen haben die in Fig. 3 (und die in Fig. 4 sowie in Fig. 5) verwendeten Bezeichnungen dieselbe Bedeutung wie in Fig. 2.

In Fig. 4 ist die bevorzugte Ausführungsform des Tiefpassfilters dargestellt, bei der die Gesamt-Induktivität des Filters aus schutztechnischen Gründen in zwei Teile L1ZSS, L2ZSS aufgeteilt ist, wobei jeweils ein Teil in der Leitung 46 und der andere Teil in der Leitung 47 angeordnet ist. Falls an anderer Stelle der gesamten Schaltung ein Masseschluss/Erdschluss auftritt, so wirkt die Teil-Induktivität L2zss als Drossel, die den Stromanstieg begrenzt. Außerdem ist in jeder der Leitungen 46, 47 ein Stromsensor 61, 62 oder auch ein gemeinsamer Summenstromsensor angeordnet.

Durch eine nicht in Fig. 4 dargestellte, mit den Stromsensoren 61, 62 (die wiederum Stromwandler sein können) verbundene Auswertungseinrichtung wird der Maximalstrom und/oder der Summenstrom (unter Berücksichtigung des Vorzeichens) in den Leitungen 46, 47 ausgewertet. Ein zu hoher Maximalwert, eine zu hohe Differenz der Beträge bzw. ein zu stark von dem Summenstrom 0 abweichender Stromwert deuten auf einen Masseschluss / Erdschluss im Zwischenkreis oder in einer der Komponenten, die über Halbleiter mit diesem verbunden sind (wie z.B. der Generator, die Traktionsmotoren oder der Bremswiderstand). In diesem Fall können z.B. durch Sperren des Wechselrichters 15 der Erdschlussstrom unterbrochen und hierdurch Folgefehler vermieden werden.

Fig. 5 zeigt die optionale Verwendung eines Spartransformators 63 in der Verbraucherverbindung 36. Ohne galvanische Trennung zwischen den Leitungspunkten P-Z10, P-Z20 in Leitung 46 bzw. P-Z11, P-Z21 in Leitung 47 wird die Ausgangsspannung UZSS des Wechselrichters 15 in die Verbraucherspannung UZSS_V transformiert. Wiederum kann ein L-C-Tiefpassfilter vorgesehen sein.

Zusammenfassend kann festgestellt werden, dass die in Fig. 2 dargestellte Anordnung eine Grundidee der Erfindung umsetzt. Ein Wechselspannungs-Potential eines Verbrauchers oder ein Potential eines Wechselrichterausganges wird als ein gemeinsames Bezugs-/ Massepotential für den speisenden Stromrichter (Gleichrichter am Eingang des Zwischenkreises) und Verbraucher gewählt. Entsprechend den in Fig. 2, 3, 4 und 5 gezeigten Ausführungsformen kann daher auf eine galvanische Trennung zwischen Stromrichter und diesem Verbraucher (im Beispiel Zugstrom-Sammelschiene betrachtet werden) verzichtet werden.

Weist die Gesamt-Schaltung (wie in Fig. 1 und Fig. 2 gezeigt) mehrere Wechselrichter zur Speisung verschiedener Gruppen von Einrichtungen auf, können die zugehörigen magnetischen Komponenten optimiert werden und Gewicht, Volumen und Kosten reduziert werden.

In der Regel haben die von den verschiedenen Wechselrichtern gespeisten Gruppen von Einrichtungen (z. B. Fahrmotoren, Hilfsbetriebe, Verbraucher an dem Verbraucher-Wechselrichter) verschiedene Nennspannungen. Die zum Traktionskreis zählenden Einrichtungen wie Traktionsmotoren und Generator sind von der Isolationsauslegung gleichwertig wie der Gleichrichter ausgeführt. Hilfsbetriebe und Zugstromversorgung haben üblicherweise ein niedrigeres Nennspannungsniveau (z. B. 480 V für Hilfsbetriebe / 1000 V für Zugstromversorgung).

Speisen zwei verschiedene Wechselrichter Gruppen von Einrichtungen, so kann bei Wahl des gemeinsamen Bezugspunktes (Massepunkt) auf der Verbraucherseite einer Gruppe auf die galvanische Trennung dieser Verbrauchergruppe verzichtet werden. Wie in Fig. 2 gezeigt, kann der Trenntransformator aus Fig. 1 zwischen Verbraucher-Wechselrichter 15 und Zugstrom-Sammelschiene IZSS entfallen (Fig. 1 und 2, 3). Der galvanisch trennende Transformator 14 für die Hilfsbetriebespeisung (Aux_Tr) ist weiterhin erforderlich.

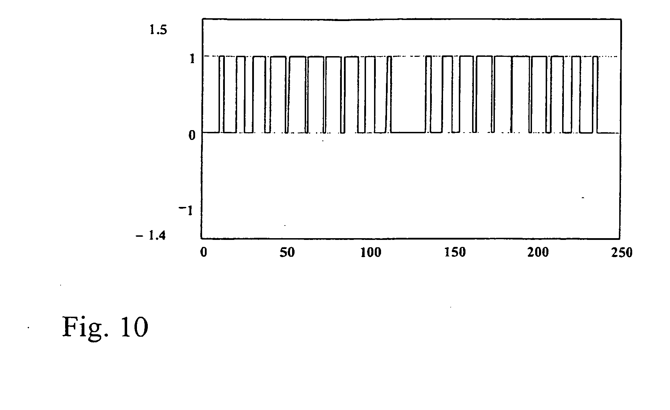

Die Verbindung mit Fahrzeugmasse auf der Ausgangsseite (Verbraucherseite) eines Wechselrichters führt entsprechend der Schalthandlung des Wechselrichters zu Potentialsprüngen im Zwischenkreis (s. Fig. 10). Die Figur zeigt die auf die momentane Zwischenkreisspannung uD normierte Spannung des Potenzials P-UD+ gegen Masse als Funktion der Zeit.

Da die anderen Wechselrichter, die an den Zwischenkreis angeschlossen sind, auf Grund der selbst erzeugten Schalthandlungen gleichwertige Potentialsprünge gegen Masse verursachen, entstehen keine höheren Potentialbelastungen die zusätzliche Anforderungen an die Common-Mode-Festigkeit der elektronischen Komponenten erforderlich machen.

Die Leistung eines Dieselmotors für Schienenfahrzeuge ist etwa proportional zur dritten Potenz der Drehzahl des Dieselmotors. Bei niedriger geforderter Antriebsleistung (z. B. Stillstand und gesperrtem Traktions-Wechselrichter) ist die Drehzahl meist niedrig und sind dadurch auch die annähernd proportional mit der Drehzahl sich verändernde Spannung des Generators und auch die Zwischenkreisspannung uD niedrig.

Aufgabe des Verbraucher-Wechselrichters ist es, aus der Zwischenkreisspannung uD eine Wechselspannung mit konstanter Frequenz zu erzeugen, deren Spannungseffektivwert und Kurvenform den Anforderungen entsprechen, insbesondere den Normen UIC 550 und UIC626 genügen. Nach UIC 626 ist z. B. eine Kurvenform der Ausgangsspannung des Verbraucher-Wechselrichters zulässig, die zwischen der Form einer Sinuskurve und der einer Rechteckkurve liegt.

Bisher wurden folgende Verfahren angewendet, um die Ausgangsspannung des Wechselrichters steuern zu können:

- Eine Rechteckspeisung des Wechselrichters, bei der das positive Zwischenkreispotential P-UD+ und das negative Potential P-UDwechselweise über elektronische Schalter (siehe z. B. Fig. 6) an die Verbraucher-Wechselrichterausgänge (Punkte P-Z10 und P-Z11) geschaltet werden. Durch Phasenverschiebung der Zündimpulse beider Brückenzweige (in der Literatur auch als Schwenksteuerung bezeichnet) kann der Effektivwert der Wechselrichter-Ausgangsspannung und damit auch die Spannung am Verbraucher (Uzss), verändert werden. Der Scheitelwert der Ausgangsspannung entspricht bei dieser Steuerung dem gegebenenfalls mit dem Transformator-Übersetzungsverhältnis (Fig. 5) auf die Verbraucherseite umgerechneten Momentanwert der Zwischenkreisspannung uD.
- Es wird eine Sinus- oder sinusähnliche Speisung der Verbraucher vorgenommen, bei der durch Pulsweitenmodulation auf der Ausgangseite des Wechselrichters der Effektivwert und Scheitelwert der Ausgangsspannung kontinuierlich und unabhängig von der Zwischenkreisspannung uD gesteuert werden können. Dabei liegt der Effektivwert der Ausgangsspannung unter der Zwischenkreisspannung. Zur Spannungsglättung ist hierbei zwischen Wechselrichterausgang und Verbraucher ein Tiefpassfilter bestehend aus einer Induktivität und einer Kapazität geschaltet.
- Ein bekanntes Taktverfahren zur Steuerung der Ausgangsspannung des Verbraucher-Wechselrichters ist das Unterschwingungsverfahren auch als "natural sampling" bekannt (siehe Fig. 7). Bei diesem Verfahren wird eine sinusförmige Sollwertspannung Usoll mit einer Dreiecksspannung Udreieck verglichen. Mit (t) ist bezeichnet, dass die Spannungen Funktionen der Zeit t sind. Damit in jeder Periode der Dreiecksspannung definierte Schnittpunkte mit der Sinussollwertspannung entstehen, ist der Scheitelwert der Sollwertspannung kleiner als der Scheitelwert der Dreiecksspannung. Die Umschaltpunkte und damit die Wechselrichterausgangsspannung Uzss ergeben sich durch die Schnittpunkte beider Spannungskurven. Bei diesem Verfahren ist die Pulsfrequenz ein ganzzahliges Vielfaches der Grundfrequenz. Der maximale Effektivwert U1 effmax1 der Grundschwingungsspannung ergibt sich bei hoher Schaltfrequenz und idealen elektronischen Schaltern (es wird also angenommen, dass die Schalter keine Totzeit aufweisen) zu

$$U1effmax1 = uD/\sqrt{2} \ , \qquad (Gl. \ 1)$$

also durch den Quotienten der Zwischenkreisspannung uD und der Quadratwurzel aus 2.

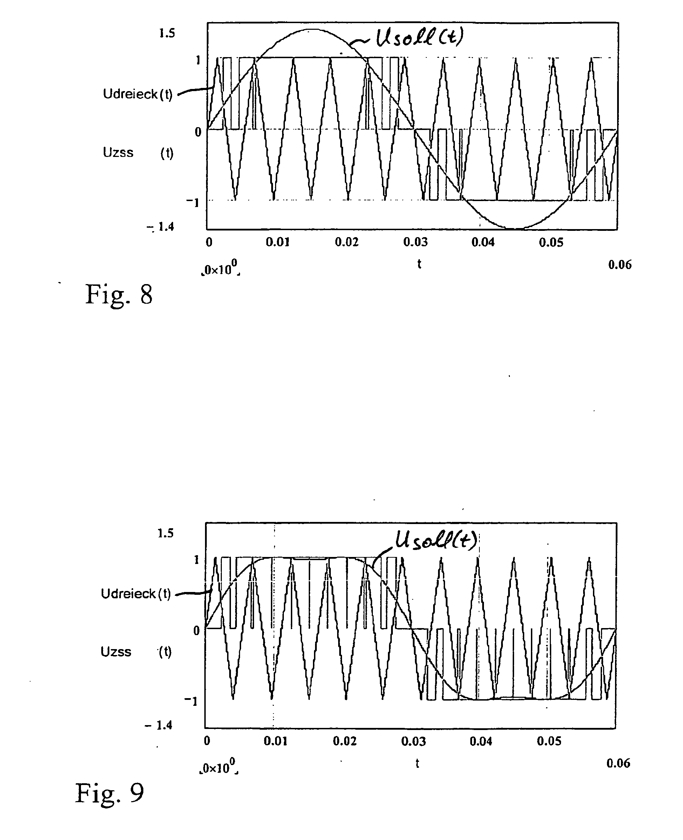

- Zur Erhöhung des Effektivwertes der Wechselrichterausgangsspannung über den Wert von Gl. 1 sind verschiedene Steuerverfahren zur Steuerung des Wechselrichters bekannt. Bei einem Steuerverfahren wird, wie in Fig. 8 gezeigt, das so genannte Verfahren der Übermodulation angewendet. Hierbei wird die Amplitude der Sollwertspannung Usoll über den Scheitelwert der Dreiecksspannung Udreieck hinaus vergrößert. Wie in Fig. 8 gezeigt, ergeben sich in der Mitte jeder halben Periode der Sollwertsinuskurve keine Schnittpunkte mehr mit der Dreiecksspannung und es entsteht ein entsprechend breiter Spannungs-Rechteckblock der Ausgangsspannung UZSS. Nachteilig hierbei ist, dass sich die Taktfrequenz ändert und zusätzliche niederfrequente Harmonische auftreten. Der maximal mögliche Effektivwert U1effmax2 der Spannungsgrundschwingung erreicht hierbei den Wert

$$U1effmax2 = 4 \bullet uD \ / \ (\pi \bullet \sqrt{2} \ ) \approx 0{,}9 \bullet uD \qquad (Gl. \ 2)$$

Die Wechselrichterausgangsspannung Uzss hat dann Rechteckform (180° Spannungsblöcke). Für Anordnungen mit Tiefpassfilter in der Verbraucherverbindung ist diese Art der Steuerung ungeeignet.

Verbesserte Eigenschaften werden durch das Verfahren mit den in Fig. 9 gezeigten Spannungsverläufen erreicht. Hierbei wird zur Erhöhung der Wechselrichterausgangsspannung die Sinussollwert-Grundschwingungsspannung auf $(2/3)^{0.5} \approx 115{,}5 \ \%$ der Scheitelwerte der Dreiecksspannung erhöht und durch Addition einer (in Bezug auf die Frequenz der Grundschwingung) dritten Harmonischen in der Weise vergrößert, dass der Scheitelwert der Summensollwertspannung (Grundschwingung plus dritte Harmonische) nicht größer wird als der Scheitelwert der Dreiecksspannung.

Bei Addition einer dritten Harmonischen mit einer Amplitude von ca. 16,5 % der Amplitude der Grundschwingung steigt der maximale Effektivwert U1effmax3 der Grundschwingungsspannung auf

$$U1effmax3 = (uD \bullet \sqrt{2})/\sqrt{3} = 0,8165 \bullet uD \approx 1,155 \bullet U1effmax1 \quad \text{(Gl. 3)}$$

an.

Durch diese dritte Harmonische in der Sollwert-Steuerspannung und damit auch in der Wechselrichterausgangsspannung entsteht zusätzlich eine 4te Harmonische im Zwischenkreis, die sich bei taktendem Traktionswechselrichter negativ auf den Traktionsantrieb auswirken kann. Zur Reduzierung dieser 4ten Harmonischen im Zwischenkreis kann ein entsprechendes L-C-Filter im Zwischenkreis eingesetzt werden.

Zur Erreichung der nach UIC 550 geforderten Mindesteffektivspannung der Zugsammelschiene von z. Bsp. 800 V für Energieversorgungsanlagen mit 1000 V Nennspannung ist es daher vorteilhaft, bei niedriger Dieselmotordrehzahl, in der Regel bei gesperrten Traktionswechselrichtern, zum Zweck einer Anhebung der Wechselrichterausgangsspannung die Sollwertsteuerspannung je nach Bedarf durch Addition einer 3ten Harmonischen oder durch Anhebung der Sinussollwertspannung über den Scheitelwert der Dreieckspannung hinaus zu erhöhen. Bei Freigabe der Traktion und Erhöhung der Drehzahl des Dieselmotors, die eine Erhöhung der Zwischenkreisspannung bewirkt, kann dann z. B. auf die oben beschriebene Taktsteuerung "Unterschwingungsverfahren mit Sinussollwertspannung" umgeschaltet werden.

Durch das bedarfsorientierte Anpassen der Sollwertspannung werden negative Einflüsse der veränderten Sollwertspannungskurve, wie z. B. das Auftreten einer 4ten Harmonischen im Zwischenkreis und deren Rückwirkung auf den Traktionskreis, vermieden.

Im Folgenden werden optional vorhandene Merkmale beschrieben, dies sich nicht oder nicht zwingend auf die Ausführungsbeispiele der Figurenbeschreibung beziehen.

Bei der erfindungsgemäßen Anordnung kann die elektrische Leitung der Wechselspannungs-Verbraucherverbindung den Teil einer Zugstrom-Sammelschiene aufweisen, der in dem Triebfahrzeug eines Zugverbandes angeordnet ist.

Alternativ oder zusätzlich kann eine zweite elektrische Leitung der Wechselspannungs-Verbraucherverbindung den Verbraucher-Wechselrichter ohne galvanische Trennung mit einem elektrischen Kontakt zum Kontaktieren einer Fahrschiene des Schienenfahrzeugs oder des Zugverbandes verbinden.

Alternativ oder zusätzlich kann an den Gleichspannungs-Zwischenkreis zumindest ein weiterer Wechselrichter angeschlossen sein, insbesondere ein oder mehrere Wechselrichter zur Versorgung von Antriebsmotoren des Schienenfahrzeugs oder des Zugverbandes mit elektrischer Energie, zumindest ein Wechselrichter zur Versorgung von Einrichtungen mit elektrischer Energie, die nicht unmittelbar dem Antrieb des Schienenfahrzeugs oder des Zugverbandes dienen, die aber für die Funktion des Antriebs erforderlich sind, und/oder ein Chopper, der an einen oder mehrere Bremswiderstände zur elektrischen Bremsung des Schienenfahrzeugs oder des Zugverbandes angeschlossen ist.

Alternativ oder zusätzlich kann die Wechselspannungs-Verbraucherverbindung eine einphasige Wechselstrom-Verbindung mit zwei Leitungen aufweisen, wobei die Anordnung Stromsensoren aufweist, die ausgestaltet sind, die Ströme durch die beiden Leitungen und/oder die Summe der Ströme zu messen, wobei die Anordnung eine Strom-Auswertungseinrichtung aufweist, die ausgestaltet ist, die gemessenen Ströme miteinander zu vergleichen und bei einem vordefinierten Unterschied der beiden Ströme ein Signal auszugeben bzw. die Summe auszuwerten und bei Erreichen oder Überschreiten eines vordefinierten Wertes der Summe ein Signal auszugeben, insbesondere um den Verbraucher-Wechselrichter zu sperren.

Bezüglich dem erfindungsgemäßen Verfahren kann, wenn die Wechselspannungs-Verbraucherverbindung eine einphasige Wechselstrom-Verbindung mit zwei Leitungen aufweist, der Betrag der Ströme durch die beiden Leitungen und/oder die Summe der Ströme gemessen werden und können die gemessenen Beträge der Ströme miteinander verglichen werden und bei einem vordefinierten Unterschied der beiden Ströme ein Signal ausgegeben werden und/oder die Summe ausgewertet werden und bei Erreichen oder Überschreiten eines vordefinierten Wertes der Summe ein Signal ausgegeben werden.

Insbesondere kann bei Empfang des Signals zumindest eine der beiden Leitungen unterbrochen werden und/oder der Verbraucher-Wechselrichter ausgeschaltet werden.

**Patentansprüche**

1. Anordnung zum Versorgen von Verbrauchern in einem Schienenfahrzeug mit elektrischer Energie, insbesondere Verbrauchern in einem von einem dieselelektrischen Antriebsaggregat angetriebenen Schienenfahrzeug oder Zugverband, wobei die Anordnung aufweist:

- einen Generator (3) zum Erzeugen der elektrischen Energie, wobei der Generator (3) vorzugsweise von einem Dieselmotor (1) angetrieben wird,
- einen Gleichspannungs-Zwischenkreis (7), der mit dem Generator (3) verbunden ist,
- einen Verbraucher-Wechselrichter (15) zum Erzeugen von Wechselspannung aus dem Gleichspannungs-Zwischenkreis (7),
- eine Wechselspannungs-Verbraucherverbindung (36), die zur Übertragung von elektrischer Energie den Verbraucher-Wechselrichter (15) mit einem oder mehreren Verbraucher-Anschlusspunkten (23) zum Anschließen eines oder mehrerer der Verbraucher verbindet,
**dadurch gekennzeichnet, dass**

- die elektrische Leitung (46) der Wechselspannungs-Verbraucherverbindung den Wechselrichter ohne galvanische Trennung mit dem oder den Verbraucher-Anschlusspunkten (23) verbindet,
- der Generator (3) eine Synchronmaschine ist und die Anordnung ausgestaltet ist, den Generator (3) bei niedriger Drehzahl, während das Schienenfahrzeug keine Antriebskraft benötigt, übererregt zu betreiben,
- die Wechselspannungs-Verbraucherverbindung (36) und/oder eine elektrische Verbindung zwischen dem Verbraucher-Anschlusspunkt und dem Verbraucher ein Tiefpassfilter (LZSS, CZSS) mit einer Induktivität (LZSS) und einer Kapazität (CZSS) aufweist und
- die Induktivität in mehrere Teile (L1ZSS, L2ZSS) aufgeteilt ist, wobei jeweils einer der Teile (L1ZSS, L2ZSS) in einer von mehreren Leitungen (46, 47) der Wechselspannungs-Verbraucherverbindung (36) oder der Verbindung zwischen dem Verbraucher-Anschlusspunkt und dem Verbraucher angeordnet ist.

2. Anordnung nach Anspruch 1, wobei die elektrische Leitung (46) der Wechselspannungs-Verbraucherverbindung den Teil einer Zugstrom-Sammelschiene (Izss) aufweist, der in dem Triebfahrzeug eines Zugverbandes angeordnet ist.

3. Anordnung nach Anspruch 1 oder 2, wobei eine zweite elektrische Leitung (47) der Wechselspannungs-Verbraucherverbindung (36) den Verbraucher-Wechselrichter (15) ohne galvanische Trennung mit einem für eine Rückführung eines Stroms von den Verbrauchern zentralen Anschlusspunkt (PZSS1) verbindet.

4. Anordnung nach dem vorhergehenden Anspruch, wobei eine Verbindung des zentralen Anschlusspunkts (PZSS1) mit Fahrzeugmassepotenzial (Punkt 25) mit einem Stromsensor (41) gekoppelt ist, der ausgestaltet ist, den Strom durch die Verbindung zu messen.

5. Anordnung nach einem der beiden vorhergehenden Ansprüche, wobei der zentrale Anschlusspunkt (PZSS1) über eine Drosselspule (LP) mit Fahrzeugmassepotenzial (Punkt 25) verbunden ist.

6. Anordnung nach dem vorhergehenden Anspruch, wobei an Stelle der Drosselspule ein niederohmiger Schutzwiderstand vorgesehen ist.

7. Anordnung nach einem der beiden vorhergehenden Ansprüche, wobei parallel zu der Drosselspule oder dem Schutzwiderstand ein Kondensator geschaltet ist.

8. Anordnung nach einem der vorhergehenden Ansprüche, wobei eine zweite elektrische Leitung (47) der Wechselspannungs-Verbraucherverbindung (36) den Verbraucher-Wechselrichter (15) ohne galvanische Trennung mit einem elektrischen Kontakt zum Kontaktieren einer Fahrschiene (31) des Schienenfahrzeugs oder des Zugverbandes verbindet.

9. Anordnung nach einem der vorhergehenden Ansprüche, wobei an den Gleichspannungs-Zwischenkreis (7) zumindest ein weiterer Wechselrichter (9, 11, 13) angeschlossen ist, insbesondere ein oder mehrere Wechselrichter (9) zur Versorgung von Antriebsmotoren des Schienenfahrzeugs oder des Zugverbandes mit elektrischer Energie, zumindest ein Wechselrichter (13) zur Versorgung von Einrichtungen mit elektrischer Energie, die nicht unmittelbar dem Antrieb des Schienenfahrzeugs oder des Zugverbandes dienen, die aber für die Funktion des Antriebs erforderlich sind, und/oder ein Chopper (11), der an einen oder mehrere Bremswiderstände (12) zur elektrischen Bremsung des Schienenfahrzeugs oder des Zugverbandes angeschlossen ist.

10. Anordnung nach einem der vorhergehenden Ansprüche, wobei in der Wechselspannungs-Verbraucherverbindung (36) ein Transformator (63) ohne galvanische Trennung angeordnet ist.

11. Anordnung nach einem der vorhergehenden Ansprüche, wobei die Wechselspannungs-Verbraucherverbindung (36) eine einphasige Wechselstrom-Verbindung mit zwei Leitungen (46, 47) aufweist, wobei die Anordnung Stromsensoren (61, 62) aufweist, die ausgestaltet sind, die Ströme durch die beiden Leitungen (46, 47) und/oder die Summe der Ströme zu messen, und wobei die Anordnung eine Strom-Auswertungseinrichtung aufweist, die ausgestaltet ist, die gemessenen Ströme miteinander zu vergleichen und bei einem vordefinierten Unterschied der beiden Ströme ein Signal auszugeben bzw. die Summe auszuwerten und bei Erreichen oder Überschreiten eines vordefinierten Wertes der Summe ein Signal auszugeben, insbesondere um den Verbraucher-Wechselrichter (15) zu sperren.

12. Anordnung nach einem der vorhergehenden Ansprüche, wobei eines oder beide Potenziale des Gleichspannungs-Zwischenkreises (7) über einen Widerstand oder über Widerstände mit einem Massepotenzial des Schienenfahrzeugs oder des Zugverbandes verbunden ist/sind.

13. Verfahren zum Versorgen von Verbrauchern in einem Schienenfahrzeug mit elektrischer Energie, insbesondere Verbrauchern in einem von einem dieselelektrischen Antriebsaggregat angetriebenen Schienenfahrzeug oder Zugverband, wobei:

- durch einen Generator (3) elektrische Energie erzeugt wird, wobei der Generator (3) vorzugsweise von einem Dieselmotor (1) angetrieben wird,
- die elektrische Energie von dem Generator (3) über einen Gleichspannungs-Zwischenkreis (7) zu einem Verbraucher-Wechselrichter (15) übertragen wird, der aus Gleichspannung in dem Gleichspannungs-Zwischenkreis (7) Wechselspannung erzeugt,
- die elektrische Energie von dem Verbraucher-Wechselrichter über eine Wechselspannungs-Verbraucherverbindung zu einem oder mehreren Verbrauchern übertragen wird,
**dadurch gekennzeichnet, dass**

- die elektrische Energie von dem Verbraucher-Wechselrichter (15) ohne galvanische Trennung in einer elektrischen Leitung (46) der Wechselspannungs-Verbraucherverbindung (36) zu dem oder den Verbrauchern übertragen wird,
- der Generator (3) eine Synchronmaschine ist und der Generator (3) bei niedriger Drehzahl, während das Schienenfahrzeug keine Antriebskraft benötigt, übererregt betrieben wird,
- in der Wechselspannungs-Verbraucherverbindung (36) und/oder in einer elektrischen Verbindung zwischen dem Verbraucher-Anschlusspunkt und dem Verbraucher ein Tiefpassfilter (LZSS, CZSS) mit einer Induktivität (LZSS) und einer Kapazität (CZSS) betrieben wird, wobei die Induktivität in mehrere Teile (L1ZSS, L2ZSS) aufgeteilt ist und wobei jeweils einer der Teile (L1ZSS, L2ZSS) in einer von mehreren Leitungen (46, 47) der Wechselspannungs-Verbraucherverbindung (36) oder der Verbindung zwischen dem Verbraucher-Anschlusspunkt und dem Verbraucher angeordnet ist.

**Claims**

1. An arrangement for supplying consumers in a rail vehicle with electrical energy, particularly consumers in a rail vehicle or train unit driven by a diesel electric drive unit, in which the arrangement comprises:

- a generator (3) for generating the electrical energy, with the generator (3) preferably driven by a diesel engine (1),
- a direct current link (7) connected with the generator (3),
- a consumer inverter (15) for generating alternating voltage from the direct current link (7),
- an alternating current consumer connection (36) which for transferring electrical energy connects the consumer inverter (15) with one or several consumer connection points (23) for connecting one or several of the consumers,
**characterized in that**

- the electrical line (46) of the alternating current consumer connection connects the inverter without galvanic isolation with the consumer connection point or consumer connection points (23),
- the generator (3) is a synchronous machine and the arrangement is designed to operate the generator (3) overexcitedly at low speed when the rail vehicle does not require drive power,
- the alternating current consumer connection (36) and/or an electrical connection between the consumer connection point and the consumer comprises a low-pass filter (LZSS, CZSS) with an inductance (LZSS) and a capacitance (CZSS), and

- the inductance is divided into several parts (L1ZSS, L2ZSS) with one of the parts (L1ZSS, L2ZSS) each disposed in one of several lines (46, 47) of the alternating current consumer connection (36) or the connection between the consumer connection point and the consumer.

2. The arrangement as claimed in claim 1 in which the electrical line (46) of the alternating current consumer connection comprises that part of a train current bus bar (Izss) that is disposed in the tractive unit of a train unit.

3. The arrangement as claimed in claim 1 or 2 in which a second electrical line (47) of the alternating current consumer connection (36) connects the consumer inverter (15) without galvanic isolation with a central connection point (PZSS1) for a return conduction of a current from the consumers.

4. The arrangement as claimed in the preceding claim in which a connection of the central connection point (PZSS1) is coupled with vehicle earth potential (point 25) with a current sensor (41) that is designed to measure the current through the connection.

5. The arrangement as claimed in one of the two preceding claims in which the central connection point (PZSS1) is connected with vehicle earth potential (point 25) via a reactor (LP).

6. The arrangement as claimed in the preceding claim in which a low-resistance protective resistor is provided in the place of the reactor.

7. The arrangement as claimed in one of the two preceding claims in which a capacitor is connected in parallel to the reactor or the protective resistor.

8. The arrangement as claimed in one of the preceding claims in which a second electrical line (47) of the alternating current consumer connection (36) connects the consumer inverter (15) without galvanic isolation with an electrical contact for contacting a running rail (31) of the rail vehicle or the train unit.

9. The arrangement as claimed in one of the preceding claims in which connected to the direct current link (7) is at least one further inverter (9, 11, 13), particularly one or several inverters (9) for supplying drive motors of the rail vehicle or the train unit with electrical energy, at least one inverter (13) for supplying devices with electrical energy which do not directly serve the driving of the rail vehicle or the train unit but which are necessary for the function of the drive, and/or a chopper (11) which is connected to one or several braking resistors (12) for electrically braking the rail vehicle or the train unit.

10. The arrangement as claimed in one of the preceding claims in which disposed in the alternating current consumer connection (36) is a transformer (63) without galvanic isolation.

11. The arrangement as claimed in one of the preceding claims in which the alternating current consumer connection (36) comprises a single-phase alternating current connection with two lines (46, 47), in which the arrangement comprises current sensors (61, 62) which are designed to measure the currents through the two lines (46, 47) and/or the sum of the currents, and in which the arrangement comprises a current evaluation device which is designed to compare the measured currents with each other and output a signal at a predefined difference between the two currents and/or to evaluate the sum and output a signal when a predefined value of the sum is attained or exceeded, particularly in order to block the consumer inverter (15).

12. The arrangement as claimed in one of the preceding claims in which one or both potentials of the direct current link (7), via a resistor or resistors, are connected with a frame potential of the rail vehicle or the train unit.

13. A method for supplying consumers in a rail vehicle with electrical energy, particularly consumers in a rail vehicle or train unit driven by a diesel electric drive unit in which:

- electrical energy is generated by a generator (3) with the generator (3) preferably driven by a diesel engine (1),
- the electrical energy is transferred from the generator (3) via a direct current link (7) to a consumer inverter (15) which generates alternating voltage from direct voltage in the direct current link (7),
- the electrical energy is transferred from the consumer inverter via an alternating current consumer connection to one or several consumers,

**characterized in that**

- the electrical energy is transferred from the consumer inverter (15) without galvanic isolation in an electrical line (46) of the alternating current consumer connection (36) to the consumer or the consumers,
- the generator (3) is a synchronous machine and the generator (3) is operated overexcitedly at low speed when the rail vehicle does not need driving power,
- in the alternating current consumer connection (36) and/or in an electrical connection between the consumer connection point and the consumer, a low-pass filter (LZSS, CZSS) with an inductance (LZSS) and a capacitance (CZSS) is operated in which the inductance is divided into several parts (L1ZSS, L2ZSS) and in which one of these parts (L1ZSS, L2ZSS) each is disposed in one of several lines (46, 47) of the alternating current consumer connection (36) or the connection between the consumer connection point and the consumer.

## Revendications

1. Ensemble servant à alimenter en énergie électrique des consommateurs dans un véhicule sur rails, en particulier des consommateurs dans un véhicule sur rails ou dans un convoi entraîné par un groupe d'entraînement diesel-électrique, sachant que l'ensemble présente :

   - un générateur (3) servant à produire l'énergie électrique, sachant que le générateur (3) est entraîné de préférence par un moteur diesel (1),
   - un circuit intermédiaire à tension continue (7), qui est relié au générateur (3),
   - un onduleur de consommateur (15) servant à produire une tension alternative à partir du circuit intermédiaire à tension continue (7),
   - une liaison de consommateur à tension alternative (36), qui relie, aux fins de la transmission d'énergie électrique, l'onduleur de consommateur (15) à un point ou à plusieurs points de raccordement de consommateur (23) servant à raccorder un ou plusieurs des consommateurs, **caractérisé en ce que**
   - la ligne électrique (46) de la liaison de consommateur à tension alternative relie l'onduleur sans séparation galvanique au ou aux point(s) de raccordement de consommateur (23),
   - le générateur (3) est une machine synchrone et l'ensemble est configuré pour faire fonctionner en mode surexcité le générateur (3) à une vitesse de rotation faible, alors que le véhicule sur rails ne requiert aucune force d'entraînement,
   - la liaison de consommateur à tension alternative (36) et/ou une liaison électrique entre le point de raccordement de consommateur et le consommateur présentent un filtre passe-bas (LZSS, CZSS) présentant une inductance (LZSS) donnée et une capacité (CZSS) donnée, et
   - l'inductance est répartie en plusieurs parties (L1ZSS, L2ZSS), sachant que respectivement une des parties (L1ZSS, L2ZSS) est disposée dans une des nombreuses conduites (46, 47) de la liaison de consommateur à tension alternative (36) ou de la liaison entre le point de raccordement de consommateur et le consommateur.

2. Ensemble selon la revendication 1, sachant que la ligne électrique (46) de la liaison de consommateur à tension alternative présente la partie d'un rail collecteur de courant de traction (lzss), qui est disposé dans le véhicule moteur d'un convoi.

3. Ensemble selon la revendication 1 ou 2, sachant qu'une deuxième ligne électrique (47) de la liaison de consommateur à tension alternative (36) relie l'onduleur de consommateur (15) sans séparation galvanique à un point de raccordement (PZSS1) central en vue d'un reflux d'un courant depuis les consommateurs.

4. Ensemble selon la revendication précédente, sachant qu'une liaison du point de raccordement (PZSS1) central est couplée au potentiel de masse de véhicule (point 25) comprenant un capteur de courant (41), qui est configuré pour mesurer le courant à travers la liaison.

5. Ensemble selon l'une quelconque des deux revendications précédentes, sachant que le point de raccordement (PZSS1) central est relié par l'intermédiaire d'une bobine d'arrêt (LP) au potentiel de masse de véhicule (point 25).

6. Ensemble selon la revendication précédente, sachant qu'une résistance de protection à faible valeur ohmique est prévue au lieu de la bobine d'arrêt.

7. Ensemble selon l'une quelconque des deux revendications précédentes, sachant qu'un condensateur est monté en parallèle par rapport à la bobine d'arrêt ou à la résistance de protection.

8. Ensemble selon l'une quelconque des revendications précédentes, sachant qu'une deuxième ligne électrique (47) de la liaison de consommateur à tension alternative (36) relie l'onduleur de consommateur (15) sans séparation galvanique à un contact électrique servant à établir un contact avec un rail de roulement (31) du véhicule sur rails ou du convoi.

9. Ensemble selon l'une quelconque des revendications précédentes, sachant qu'au moins un autre onduleur (9, 11, 13) est raccordé au circuit intermédiaire à tension continue (7), en particulier un ou plusieurs onduleurs (9) servant à alimenter en énergie électrique des moteurs d'entraînement du véhicule sur rails ou du convoi, au moins un onduleur (13) servant à alimenter en énergie électrique des équipements, qui ne servent pas directement à l'entraînement du véhicule sur rails ou du convoi, lesquels sont toutefois requis pour la fonction d'entraînement, et/ou un hacheur élévateur (11), qui est raccordé à une ou à plusieurs résistances de freinage (12) servant au freinage électrique du véhicule sur rails ou du convoi.

10. Ensemble selon l'une quelconque des revendications précédentes, sachant qu'un transformateur (63) sans séparation galvanique est disposé dans la liaison de consommateur à tension alternative (36).

11. Ensemble selon l'une quelconque des revendications précédentes, sachant que la liaison de consommateur à tension alternative (36) présente une liaison à courant alternatif monophasée pourvue de deux lignes (46, 47), sachant que l'ensemble présente des capteurs de courant (61, 62), qui sont configurés pour mesurer les courants à travers les deux lignes (46, 47), et/ou la somme des courants et sachant que l'ensemble présente un équipement d'évaluation de courant qui est configuré pour comparer les uns aux autres les courants mesurés et émettre un signal ou évaluer la somme en présence d'une différence prédéfinie entre les deux courants et pour émettre un signal lorsqu'une valeur prédéfinie de la somme est atteinte ou est dépassée, en particulier pour bloquer l'onduleur de consommateur (15).

12. Ensemble selon l'une quelconque des revendications précédentes, sachant qu'un potentiel ou deux potentiels du circuit intermédiaire à tension continue (7) est ou sont reliés, par l'intermédiaire d'une résistance ou de résistances, à un potentiel de masse du véhicule sur rails ou du convoi.

13. Procédé servant à alimenter en énergie électrique des consommateurs dans un véhicule sur rails, en particulier des consommateurs dans un véhicule sur rails ou dans un convoi entraîné par un groupe d'entraînement diesel-électrique, sachant que :

- de l'énergie électrique est produite par un générateur (3), sachant que le générateur (3) est entraîné de préférence par un moteur diesel (1),
- l'énergie électrique est transférée depuis le générateur (3), en passant par un circuit intermédiaire à tension continue (7), vers un onduleur de consommateur (15), qui produit à partir d'une tension continue, dans le circuit intermédiaire à tension continue (7), une tension alternative,
- l'énergie électrique est transmise depuis l'onduleur de consommateur, en passant par une liaison de consommateur à tension alternative, vers un ou plusieurs consommateurs, **caractérisé en ce que**
- l'énergie électrique est transmise de l'onduleur de consommateur (15) sans séparation galvanique dans une ligne électrique (46) de la liaison de consommateur à tension alternative (36) vers le ou les consommateurs,
- le générateur (3) est une machine synchrone et le générateur (3) fonctionne en mode surexcité à une vitesse de rotation faible, alors que le véhicule sur rails ne requiert aucune force d'entraînement,
- un filtre passe-bas (LZSS, CZSS) présentant une inductance (LZSS) donnée et une capacité (CZSS) donnée fonctionne dans la liaison de consommateur de tension alternative (36) et/ou dans une liaison électrique entre le point de raccordement de consommateur et le consommateur, sachant que l'inductance est répartie en plusieurs parties (L1ZSS, L2ZSS) et sachant que respectivement une des parties (L1ZSS, L2ZSS) est disposée dans une des nombreuses lignes (46, 47) de la liaison de consommateur à tension alternative (36) ou de la liaison entre le point de raccordement de consommateur et le consommateur.

Fig. 1

Fig. 2

EP 2 040 954 B1

Fig. 3

Fig. 4

Fig. 5

Zss_Inv

P-UD+

53

55

46

P-Z10

51

52

P-Z11

54

56

47

15

P-UD-

**Fig. 6**

Usoll (t)

Udreieck(t)

1.5

1

0

(t)

-1

- 1.4

0          0.01        0.02        0.03        0.04        0.05

.0×10⁰.                                    t                      0.06

**Fig. 7**

**Fig. 8**

**Fig. 9**

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Antriebssteuerung und -regelung im dieselelektrischen Triebzug Baureihe 605 drive control of D.M.U. class 605 Commande de Traction de L'Automotrice Diesel Elektrique Serie 605. **C. GENSLER.** Elektrische Bahnen. Oldenbourg Industrieverlag, Oktober 2001, vol. 99, 422-429

- Dieselelektrische Güterzuglokomotive Eurorunner. ER20 CH für die Litauische Staatsbahn - die sechssachsige dieselelektrische Lokomotivfamilie Eurorunner Diesel-Electric Freight Locomotive Eurorunner ER20 CF for the Lituanlan Railways - The Six-Axle Diesel. **M. CHOLLET et al.** Zevrail - Glasers Annalen. Georg Siemens Verlag, Juli 2007, 138-150
- **ALBRECHT GRAEFEN.** *ETR, Zeitschrift für die gesamte Eisenbahntechnik,* Oktober 1972, 363-370